# EUROPEAN PATENT SPECIFICATION

(11) **EP 0 847 426 B1**
(45) Date of publication and mention of the grant of the patent: **30.07.2003**
(21) Application number: 97927222.6
(22) Date of filing: 24.06.1997
(51) Int. Cl.: C09D 5/16, C08F 2/00, C23F 15/00

(54) **ANTIFOULING COATING**
FÄULNISVERHINDERNDES ANSTRICHMITTEL
REVETEMENT ANTISALISSURE

(30) Priority: 24.06.1996 FI 962612
(43) Date of publication of application: 17.06.1998
(73) Proprietor: Borealis Technology Oy, 06101 Porvoo (FI)
(72) Inventor: IDELMANN, Peter, FIN-01300 Vantaa (FI); PALMQVIST, Ulf, S-44441 Stenungsund (SE); MÜNSTEDT, Helmüt, D-91054 Buckenhof (DE)
(74) Representative: Hakkila, Maini Annika
(86) International application number: FI9700404
(87) International publication number: WO97049771

(56) References cited:
- US-A- 4 957 982
- US-A- 5 026 795
- FILE WPI, Derwent Accession No. 77-40988, TOA GOSEI CHEM. IND. LTD., "Suspension Polymerisation of Vinyl Chloride - in Vessel Coated with Scale Inhibiting Compsn."; & JP,A,52 053 990, 30-04-77.
- FILE WPI, Derwent Accession No. 77-80295, TOA GOSEI CHEM IND LTD., "Suspension Polymerisation of Vinyl Chloride - in Which a Triaryl-Phosphonium Cyclopentadienylide is Coated Onto Inner Walls"; & JP,A,52 115 889, 28-09-77.

## Description

The present invention concerns antifouling coating for vessels, lines or other equipment exposed to liquid or gaseous mediums or powders causing fouling of the surfaces, Especially the invention concerns an antifouling coating for reactors, lines and equipment used in the polymerization art.

Reactor fouling is a known problem for example in polymerizing olefins. The build-up of the polymer on the surfaces of the polymerization reactor decreases productivity and interfers with the quality of the end product. Several solutions to avoid this problem have been developed. One solution is to polish the surfaces of the reactor or line in order to avoid polymer adhesion. However, this kind of polishing is very expensive and the effect is not very durable.

Another solution is to add antistatic or antifouling agents into the polymerization medium in order to reduce polymer build-up on the surfaces of the reactor. However, antistatic agents tend to interfere with the polymerization or reduce the activity of the polymerization catalysts, because these agents have to be added in considerable amounts. Many fouling preventing agents are at the same time catalyst poisons and therefore they can be used only in relatively small amounts. Furthermore, antifouling agents remain in the end product and may thus impair the product quality.

Another solution is to cover reactor surfaces with a compound which forms a coating on the surface of the reactor. For example in PCT application WO93/23436 a coating of polyaniline is disclosed. However, polyaniline is very difficult to prepare and apply on the surfaces of the reactor and the cost of polyanilinc is very high. In EP-patent 0 307 074 a process is disclosed, which comprises production of emulsion, dispersion, latex or bead polymers in a water medium in a polymerization reactor, where some or all reactor surfaces exposed to gaseous or liquid monomers are coated with a film of oleophobihydrophobic fluoropolymer material.

US 5 026 795 discloses an antistatic mixture which can be used in connection with homo- or copolymerization of ethylene in a gas phase, which mixture contains a polysulfone polymer, a polyamine and sulfonic acid. However, there is no indication as to which of these components is actually responsible for the antistatic effect. The antistatic agent is added to the reactor beforehand by vaporising (by flashing by the action of a heated reactor) a mixture of it and a suitable hydrocarbon diluent, and then removing said mixture from the reactor with ethylene gas. In said publication, it is believed that the antistatic agent coats the polymer and/or copolymer particles and reduces the static charge thereof. The antistatic agent presented in US 5 026 795 differs from the antifouling coating of the present application and the operation mechanism of it is completely different from the permanent antifouling coating disclosed in this application.

The requirements for reactor coating for preventing polymer build-up are, among others, solubility in at least some common hydrocarbon, which is not harmful for the environment and which do not bear a health risk for workers. Further it may preferably be fillable with a component, which imparts the polymer antistatic properties. Still further it must be sprayable or paintable on the reactor wall, also when filled. Finally, the coating must withstand the reactor conditions (especially high temperatures, different liquid or gaseous mediums), give a smooth surface and give a good adhesion to the reactor wall or other surfaces.

According to the invention a new material for antifouling coatings have been found, which fulfills the requirements above. Thus one object of the invention is to achieve an antifouling coating, which can be applied to all kinds of steel vessels, reactors and pipes, where chemical inertness, smoothness and antistatic properties are important and which are exposed to substances causing fouling of the surfaces. Another object of the invention is to achieve an antifocling coating, which can be applied on the surfaces of reactors and equipment for polymerization or post-polymerization in order to prevent fouling of the surfaces. Still another object of the invention is to achieve a polymer coating, which can be filled with antistatic agents or antisheeting compounds. Still another object of the invention is to achieve a polymer coating which can he applied easily on surfaces of reactors and other equipment and which can be easily removed, when necessary.

The objects above can be achieved according to the invention by applying on the surfaces of reactors or other equipment a coating seleced from polysulfone (PS) and polyetherimide (PEI) polymers.

Polysulfone polymers are a class of amorphous thermoplastic polymers characterized by high glass-transition temperatures, good mechanical strength, stiffnes and thermal and oxidative resistance. These polymers are characterized by the presence of the para-linked diphenylsulfone group as part of their backbone repeat units. The basic repeat unit of any polysulfone always contains sulfonc, aryl and ether units as part of the main backbone structure. Other commonly used name is polyethersulfone (PES). Polyether sulfone has good high temperature properties. It can easily be dissolved in N-methyl-2-pyrrolidone (NMP). It can easily be filled by compounds imparting the product antistatic properties,

Further it is important that the coating according to the invention can be easily painted or sprayed on the surfaces also when it is filled. Further it can be applied to all kinds of steel surfaces of reactors, lines to form a coating, which is chemically smooth and chemically inert. Polyetherimide have same kind of properties.

The thickness of coatings applied can be from 0.1 to 3 mm. The thickness required depends on the application and the environment, especially the temperature and pressure. In some applications the conditions are mild and therefore coatings having a thickness of 0.1-0.5 mm are adequate. In liquid type polymerization reactors the temperature is usually 20-80 °C, seldom higher. In gas phase reactors higher temperatures can be used and therefore greater thicknesses can be necessary.

The coatings according to the invention are based on polyether sulphone or polyetherimide dissolved in a proper solvent. A preferable solvent for PES is N-methyl-2-pyrrolidone, while also any other solvent capable of dissolving these polymers at a sufficient degree to achieve a coatable solution can be used. The polymer is dissolved in the solvent at an amount which depends on application method and the thickness desired. Thus the PES concentration in the solution can vary between 2-500 g/l. When the coating is applied by painting, more concentrated solutions can be used. When thinner coatings are formed or the coating is applied by spraying, a less concentrated solution can be used.

After spraying the solution on the surfaces being treated the solvent is removed in a conventional way.

According to the invention the antistatic properties can be increased by adding one or more antistatic agents.

The antistatic agent is a component which increases the electric conductivity of the polymer. The amount of an antistatic agent is 5-30 w-% based on the coating solution. The antistatic agents are carbon black, metal powders (e.g. chromium) or metallized mineral fillers.

The invention is applicable to reactors such as batch reactors, continuous stirred tank reactors or loop reactors, and gas phase reactors. Further the invention is also applicable to inlets and outlets of polymerization reactors as well as lines connecting reactors and other equipment, for example flash tanks, cyclones, silos.

The invention is further illustrated by the following examples.

### Example 1

Steel plates were coated with solutions of polyether sulphone (PES) in N-methyl-2-pyrrolidone (NMP) by using various concentrations, coating thicknesses and various fillers. The solvent was removed by drying. These test samples were used for cross-cut tests to study the performance of the coatings.

Cross-cut tests were carried out according to DIN 5351. A needle was used to introduce 6 long cuts in the PES layer at a distance of 4 mm and 6 additional cuts were applied at a right angle to the first ones. The cuts were made in the same way (same force, same speed). The tests were carried out at two different places of the test plate. The size of the test plates was 140x140x4 mm.

After the cuts were finished the plates were brushed by means of a smooth brush. The appearance of the cross-cut field and a comparison with pictures and descriptions were the base for the evaluation of the test (scale 0-5, zero-value the best).

The filler used was carbon black. The results are presented in Table 1,

**Table 1**

| Coating solution concentration g/l | Coating thickness mm | Concentration of filler w-% | Cross-cut value |
|---|---|---|---|
| 200 | 0.5 | - | 0.4 |
| 200 | 1.0 | - | 0 |
| 200 | 1.5 | - | 1 |
| 500 | 0.5 | - | 0.6 |
| 500 | 1.0 | - | 0 |
| 500 | 2.0 | - | 1 |
| 200 | 1.5 | 5 | 1 |
| 200 | 1.5 | 10 | 1 |
| 200 | 1.5 | 15 | 1 |
| 200 | 1.5 | 20 | 1 |
| 200 | 1.5 | 25 | 1 |
| 200 | 1 | 5 | 0 |
| 200 | 1 | 10 | 0 |
| 200 | 1 | 15 | 0 |
| 200 | 1 | 20 | 1 |
| 200 | 1 | 25 | 0 |
| 200 | 0.5 | 5 | 0 |
| 200 | 0.5 | 10 | 0 |
| 200 | 0.5 | 15 | 0 |
| 200 | 0.5 | 20 | 0 |
| 200 | 0.5 | 25 | 0 |
| 500 | 0.5 | 5 | 0 |
| 500 | 0.5 | 10 | 0 |
| 500 | 0.5 | 15 | 0 |
| 500 | 0.5 | 20 | 0 |

### Example 2

As Example 1, but chromium powder was used as the filler instead of carbon black. The concentration of the coating solution was 500 g/l. The test results are presented in Table 2.

**Table 2**

| Coating thickness mm | Concentration of filler w-% | Cross-cut value |
|---|---|---|
| 0.5 | 5 | 0 |
| 0.5 | 15 | 0 |
| 0.5 | 30 | 0 |
| 1.0 | 5 | 0 |
| 1.0 | 15 | 1 |
| 1.0 | 30 | 1 |
| 1.5 | 5 | 1 |
| 1.5 | 15 | 0 |
| 1.5 | 30 | 3 |

### Example 3

Steel plates were coated with a solution of PES in NMP. The concentration of the coating solution was 500 g/l and the amount of the carbon black acting as antistatic agent was 15 w-%. The coating thickness was 0.5 mm.

The test plates were aged in a hydrogen/ethylene atmosphere at 100 °C for 12 days. The ratio of hydrogen to ethylene was 1:10.

The cross-cut values were 0 almost in all tests. This example as well as examples 1-2 show that the coatings are resistant and survive also at conditions typical of olefin polymerization.

### Example 4

In order to study the paintability or sprayability of PES solutions the zero-shear viscosity at various concentration was measured at 25 °C. The results are presented in the following Table 3.

**Table 3**

| Concentration of coating solution g/l | Zero-shear viscosity Pas |
|---|---|
| 1 | 0.0029 |
| 5 | 0.0032 |
| 10 | 0.0041 |
| 11 | 0.005 |
| 40 | 0.01 |
| 80 | 0.016 |
| 100 | 0.031 |
| 200 | 0.12 |
| 300 | 0.14 |
| 400 | 1.6 |
| 600 | 4.8 |

### Example 5

Shear viscosity was measured as in Example 4 but the concentration of coating solution was 500 g/l and the solution contained additionally carbon black. The results are presented in the following Table 4.

**Table 4**

| Content of filler w-% | Shear viscosity at 20 °C Pas | Shear rate 1/s |
|---|---|---|
| 5 | 8 | 0.033 |
| 5 | 7.1 | 0.07 |
| 5 | 6.6 | 1 |
| 30 | 12000 | 0.0004 |
| 30 | 500 | 0.03 |
| 30 | 100 | 0.25 |
| 30 | 50 | 1 |
| 30 | 26 | 2 |

The examples 4 and 5 show that PES-solutions are paintable or sprayable as such and if fillers are added the viscosity of the solution can easily be lowered by applying shear forces.

### Example 6

Volume resistivity measurements of test samples were carried out according to DIN 53482 VDE 0303 Teil 3. The test samples were cylinder-like having a diameter of 100 mm and a thickness of about 3 mm. The carbon black content was varied between 5 w-% and 20 w-%. The results are presented in Table 5.

**Table 5**

| Carbon black content (w-%) | Volume resistivity Ohm x cm |
|---|---|
| 5 | 10⁹ |
| 10 | 10⁷ |
| 15 | 10⁶ |
| 20 | 10⁴ |

### Examples 7-8

According to Example 3 steel plates were coated with a solution of polyetherimide (PEI) in N-methyl-2-pyrrolidone. The concentration of polyetherimide, antistatic agent and concentration and the thickness of coating were varied. As the antistatic agent carbon black (Flammruss 101) was used.

The compositions and properties of the coatings are presented in Table 6.

**Table 6**

| Example | PEI-concentration g/l | Antistatic agent | Thickness of coating mm | Volume resistivity Ohm x cm | Adhesion strength (pull-off) Mpa |
|---|---|---|---|---|---|
| 7 | 200 | Carbon black 63.7 vol-% | 0.5 (sprayed) | 2 x 10⁴ | 1.3 |
| 8 | 500 | " | 1.0 (painted) | not measured | 0.8 |

## Claims

1. An antifouling coating for reactors, vessels, lines or other equipment, which are exposed to gaseous or liquid monomers or polymer powders, **characterized in that** said coating consists of polyethersulfone (PES) or polyetherimide (PEI) polymer dissolved in a solvent, and of one or more antistatic agents, the coating being filled with 5-30 w% of the antistatic agent and the antistatic agent being carbon black, metal powder or metallized mineral filler.

2. An antifouling coating according to claim 1, **characterized in that** the N-methyl-2-pyrrolidone (NMP) is used as solvent.

3. An antifouling coating according to claim 1 or 2, **characterized in that** the applied coating has a thickness of 0.1-3 mm, preferably 0.5-2 mm.

4. A method for forming an antifouling coating on surfaces of reactors, vessels, lines or other equipment exposed to liquid or gaseous monomers or polymer powders, **characterized in that** a coating is applied on the surfaces as a solution, the coating consisting of polyethersulfone (PES) or polyetherimide (PEI) polymer dissolved in a solvent, and of one or more antistatic agents, the coating being filled with 5-30 w% of the antistatic agent, and the antistatic agent being carbon black, metal powder or metallized mineral filler.

5. A method according to claim 4, **characterized in that** said coating is applied by spraying or painting.

6. A method according to claim 4 or 5, **characterized in that** N-methyl-2-pyrrolidone (NMP) is used as solvent.

7. A method according to any one of claims 4-6, **characterized in that** the applied coating has a thickness of 0.1-3 mm, preferably 0.5-2 mm.

8. Reactors, vessels, lines, silos, flash tanks or other equipment, which have surfaces exposed to liquid or gaseous monomers or polymer powders, **characterized in that** said surfaces are treated with a method according to any one of claims 4-7.

## Patentansprüche

1. Fäulnisverhindernde Beschichtung für Reaktoren, Gefäße, Auskleidungen oder eine andere Ausrüstung, die gasförmigen oder flüssigen Monomeren oder Polymerpulvern ausgesetzt sind, **dadurch gekennzeichnet, daß** die Beschichtung aus dem Polymer Polyethersulfon (PES) oder Polyetherimid (PEI), in einem Lösungsmittel gelöst, und einem oder mehreren antistatischen Mitteln besteht, wobei die Beschichtung mit 5 bis 30 Gew.-% antistatischem Mittel gefüllt ist und das antistatische Mittel Ruß, Metallpulver oder ein metallisierter mineralischer Füllstoff ist.

2. Fäulnisverhindernde Beschichtung nach Anspruch 1, **dadurch gekennzeichnet, daß** N-Methyl-2-pyrrolidon (NMP) als Lösungsmittel verwendet wird.

3. Fäulnisverhindernde Beschichtung nach Anspruch 1 oder 2, **dadurch gekennzeichnet, daß** die aufgebrachte Beschichtung eine Dicke von 0,1 bis 3 mm, vorzugsweise 0,5 bis 2 mm hat.

4. Verfahren zum Erzeugen einer fäulnisverhindernden Beschichtung auf Oberflächen von Reaktoren, Gefäßen, Auskleidungen oder einer anderen Ausrüstung, die flüssigen oder gasförmigen Monomeren oder Polymerpulvern ausgesetzt sind, **dadurch gekennzeichnet, daß** die Beschichtung als eine Lösung auf die Oberflächen aufgebracht wird, wobei die Beschichtung aus dem Polymer Polyethersulfon (PES) oder Polyetherimid (PEI), in einem Lösungsmittel gelöst, und einem oder mehreren antistatischen Mitteln besteht, wobei die Beschichtung mit 5 bis 30 Gew.-% antistatischem Mittel gefüllt ist und das antistatische Mittel Ruß, Metallpulver oder ein metallisierter mineralischer Füllstoff ist.

5. Verfahren nach Anspruch 4, **dadurch gekennzeichnet, daß** die Beschichtung durch Sprühen oder Streichen aufgebracht wird.

6. Verfahren nach Anspruch 4 oder 5, **dadurch gekennzeichnet, daß** N-Methyl-2-pyrrolidon (NMP) als Lösungsmittel verwendet wird.

7. Verfahren nach einem der Ansprüche 4 bis 6, **dadurch gekennzeichnet, daß** die aufgebrachte Beschichtung eine Dicke von 0,1 bis 3 mm, vorzugsweise 0,5 bis 2 mm hat.

8. Reaktoren, Gefäße, Auskleidungen, Silos, Kondensatsammler oder eine andere Ausrüstung, die Oberflächen aufweisen, die flüssigen oder gasförmigen Monomeren oder Polymerpulvern ausgesetzt sind, **dadurch gekennzeichnet, daß** diese Oberflächen nach einem Verfahren nach einem der Ansprüche 4 bis 7 behandelt worden sind.

## Revendications

1. Un revêtement antisalissure pour réacteurs, récipients, conduites ou autres équipements qui sont exposés à des monomères gazeux ou liquides ou à des poudres polymères, **caractérisé par le fait que** ledit revêtement consiste en un polymère de polyéthersulfone (PES) ou de polyéthérimide (PEI) dissout dans un solvant et d'un ou de plusieurs agents antistatiques, le revêtement étant chargé avec 5 à 30 % en poids de l'agent antistatique et l'agent antistatique étant du noir de carbone, une poudre métallique ou une charge minérale métallisée.

2. Un revêtement antisalissure selon la revendication 1, **caractérisé par le fait que** la N-méthyl-2-pyrrolidone (NMP) est utilisée comme solvant.

3. Un revêtement antisalissure selon la revendication 1 ou 2, **caractérisé par le fait que** le revêtement appliqué a une épaisseur de 0,1 à 3 mm, de préférence de 0,5 à 2 mm..

4. Un procédé de formation d'un revêtement antisalissure sur les surfaces de réacteurs, de récipients, de conduites ou d'autres équipements exposés à des monomères gazeux ou liquides ou à des poudres polymères, **caractérisé par le fait qu'**un revêtement est appliqué sur les surfaces sous la forme d'une solution, le revêtement consistant en un polymère de polyéthersulfone (PES) ou de polyéthérimide (PEI) dissout dans un solvant et d'un ou de plusieurs agents antistatiques, le revêtement étant chargé avec 5 à 30 % en poids de l'agent antistatique et l'agent antistatique étant du noir de carbone, une poudre métallique ou une charge minérale métallisée.

5. Un procédé selon la revendication 4, **caractérisé par le fait que** ledit revêtement est appliqué par pulvérisation ou par peinture.

6. Un procédé selon la revendication 4 ou 5, **caractérisé par le fait que** de la N-méthyl-2-pyrrolidone (NMP) est utilisée comme solvant.

7. Un procédé selon l'une quelconque des revendications 4 à 6, **caractérisé par le fait que** le revêtement appliqué a une épaisseur de 0,1 à 3 mm, de préférence de 0,5 à 2 mm.

8. Des réacteurs, des récipients, des canalisations, des silos, des réservoirs de décompression ou d'autres équipements qui ont des surfaces exposées à des monomères liquides ou gazeux ou à des poudres polymères, **caractérisés par le fait que** lesdites surfaces sont traitées par un procédé selon l'une quelconque des revendications 4 à 7.
